# EUROPEAN PATENT SPECIFICATION

(11) **EP 2 291 585 B1**
(45) Date of publication and mention of the grant of the patent: **29.02.2012**
(21) Application number: 09769092.9
(22) Date of filing: 29.05.2009
(51) Int. Cl.: F03D 11/00

(54) **A HUB ENCLOSURE FOR A HUB OF A WIND TURBINE**
NABENGEHÄUSE FÜR DIE NABE EINER WINDTURBINE
ENVELOPPE DE MOYEU POUR LE MOYEU D'UNE EOLIENNE

(30) Priority: 24.06.2008 DK 200800866; 24.06.2008 US 133049
(43) Date of publication of application: 09.03.2011
(73) Proprietor: Vestas Wind Systems A/S, 8200 Aarhus N (DK)
(72) Inventor: ANDERSEN, Carsten Bruun, DK-8210 Aarhus V (DK); BENGTSON, Niels Thomas, DK-8722 Hedensted (DK)
(74) Representative: Inspicos A/S
(86) International application number: PCT/EP2009/056602
(87) International publication number: WO 2009/156243

(56) References cited:
- EP-A2- 1 870 524
- WO-A1-2008/069818
- GR-B1- 1 005 809

## Description

### FIELD OF THE INVENTION

The present invention relates to a hub enclosure for a hub of a wind turbine. The hub enclosure may be a spinner or it may be a part which is mounted directly on a hub of a wind turbine. More particularly, the present invention relates to a hub enclosure being provided with an access aperture with an adjustable size.

### BACKGROUND OF THE INVENTION

It is sometimes required to provide a possibility of gaining access to an interior part of a hub of a wind turbine, e.g. to a spinner part or a nose cone part. It may, e.g., be necessary to gain access to the interior part of the hub in order to install, remove or replace components of the wind turbine, e.g. generator, gear, etc. In this case it is necessary to provide access openings of an appropriate size and shape to allow such components to pass. Alternatively or additionally, the access openings may be of a size and shape which allows a person to pass, e.g. in order to allow maintenance personnel to enter the area of the hub, and/or in order to provide an emergency exit from the nacelle.

Furthermore, it may be desirable to provide openings in a region near the hub for the purpose of providing ventilation. US 2006/0120862 discloses a wind energy plant with an aeration equipment for a rotor hub. The aeration equipment has a cup-shaped element which has a bottom and a circumferential side wall, and a pipe-shaped connection piece, directed into an inner space of the rotor hub. The cup-shaped element is kept in front of an entrance opening of the connection piece such that the entrance opening is arranged in the interior of the cup-shaped element. The openings disclosed in US 2006/0120862 are very inflexible, and they are not suitable for allowing large components of a wind turbine or persons to pass.

Document GR200601000478B shows a system according to the preamble of claim 1.

### DESCRIPTION OF THE INVENTION

It is an object of embodiments of the invention to provide a hub enclosure which is adapted to allow objects of various sizes to pass between the interior and the exterior of the hub enclosure.

It is a further object of embodiments of the invention to provide a hub enclosure which is adapted to allow large objects to pass between the interior and the exterior of the hub enclosure without compromising the strength of the structure.

It is an even further object of embodiments of the invention to provide a hub enclosure with access openings of configurable size and shape.

The invention provides a hub enclosure for a hub of a wind turbine, said hub enclosure comprising:
- an aperture defining an aperture area,
- at least two aperture covers arranged to cover substantially separate parts of the aperture area, each of the aperture covers being movable between a first position in which the corresponding part of the aperture area is closed and a second position in which the corresponding part of the aperture area is open,
wherein the aperture covers are positioned relative to each other in such a manner that neighbouring aperture covers are arranged to cover adjacent parts of the aperture area.

In the present context the term 'hub enclosure' should be interpreted to mean a part of the wind turbine which partly or entirely encloses or covers the hub. The hub enclosure may, e.g., be a spinner, a nose cone or a part of a spinner or a nose cone. Alternatively, it may be a part which is mounted directly on the hub.

The aperture defines an aperture area. The aperture area is preferably a maximum size of the aperture, defining the maximum size of components allowed to pass between the interior of the hub enclosure and the exterior of the hub enclosure.

The hub enclosure comprises at least two aperture covers. The aperture covers are arranged to cover substantially separate parts of the aperture area. This should be interpreted to mean that the aperture covers do not overlap, or that there is only a small overlap between neighbouring aperture covers. Furthermore, the aperture covers in combination cover the entire aperture.

Each of the aperture covers is movable between a first position and a second position. When an aperture cover is in the first position the corresponding part of the aperture is closed, and when an aperture cover is in the second position the corresponding part of the aperture is open. Thus, when all of the aperture covers are in the first position the entire aperture is closed, and passage between the interior of the hub enclosure and the exterior of the hub enclosure is not possible. When all of the aperture covers are in the second position the entire aperture is open, thereby allowing passage of objects of a maximum size between the interior of the hub enclosure and the exterior of the hub enclosure. Finally, when some of the aperture covers are in the first position and some of the aperture covers are in the second position, the aperture is partly open and partly closed, thereby defining an access opening which is smaller than the aperture area. The size of the access opening corresponds to the combined area of the aperture covers which are in the second position.

The aperture covers are positioned relative to each other in such a manner that neighbouring aperture covers are arranged to cover adjacent parts of the aperture area. Thus, when two neighbouring aperture covers are both in the second position an access opening is defined which has an area corresponding to the sum of the areas covered by the two aperture covers. Accordingly, an opening of a specific size in order to allow a specific object to pass between the interior of the hub enclosure and the exterior of the hub enclosure can be provided, simply by moving a sufficient number of neighbouring aperture covers to the second position, thereby obtaining a passage of a sufficient area. Thereby the size of the aperture can easily be configured or adjusted to match the requirements of the present situation.

It should be noted that the hub enclosure may be provided with additional apertures, each defining an aperture area, and each having at least two associated aperture covers as described above.

Each of the aperture covers may be movable from the first position to the second position in a direction towards an interior part of the hub enclosure. In the case that an aperture is moved outwards there is a risk that a gust catches the aperture cover, thereby causing damage to the aperture cover, or even tearing the aperture cover off, thereby risking that it falls to the ground causing damage to buildings or structures on the ground, or injuries or even fatalities to persons located in the vicinity of the wind turbine. It is therefore an advantage to design the aperture covers to be movable from the first position to the second position in a direction towards an interior part of the hub enclosure. However, embodiments could be envisaged in which one or more of the aperture covers are movable from the first position to the second position in an outwards direction.

Each of the aperture covers may be hinged to a part of the hub enclosure. According to this embodiment the aperture covers are moved pivotally between the first position and the second position via a hinge. Hinging the aperture covers to the hub enclosure is a simple way of mounting the aperture covers in a movable manner. As an alternative, one or more of the aperture covers may follow alternative moving patterns, e.g. a sliding moving pattern.

The aperture may be arranged in a tip part of the hub enclosure, preferably covering the entire tip part. In the present context the term 'tip part' should be interpreted to mean an outermost part of the hub enclosure, arranged as far as possible from the nacelle. As an alternative, the aperture may be arranged closer to the nacelle.

The hub enclosure may further comprise a sealing element arranged to cover a part of at least two of the aperture covers. The sealing element provides sealing between neighbouring aperture covers, and it can thereby be ensured that the hub enclosure is substantially tight when all of the aperture covers are in the first position.

The sealing element may be arranged to cover a part of each of the aperture covers, or it may be arranged to cover a part of only some of the aperture covers. In the case that the aperture is arranged in a tip part of the hub enclosure the sealing element may advantageously be arranged at the outermost part of the tip, preferably in a region where all of the aperture covers meet. In such a region there is a high risk that leaks occur, and it is therefore an advantage to position a sealing element there. Alternatively or additionally, one or more sealing elements may be arranged in regions where two neighbouring aperture covers meet, and/or in regions defining an interface between the aperture and other parts of the hub enclosure.

As mentioned above the hub enclosure may be or form part of a spinner. As an alternative, it may be or form part of a nose cone. As another alternative, it may be a part which is mounted directly on the hub.

Each of the aperture covers may be manually movable between the first position and the second position. According to this embodiment the aperture covers are always movable, regardless of power failures, fire, breakdown, etc. Furthermore, manually movable aperture covers are advantageous in the case that the aperture is to be used as an emergency exit from the nacelle.

Alternatively or additionally, the hub enclosure may further comprise means for automatically moving each of the aperture covers between the first position and the second position. Automatic movement of the aperture covers allows them to be moved without requiring the presence of a person at the hub enclosure. It may be advantageous to be able to move the aperture covers automatically as well as manually. In this case the aperture covers may be moved automatically under normal circumstances, and the aperture covers may be manually movable in the case of an emergency.

Each of the aperture covers may be mounted detachably on the hub enclosure. According to this embodiment it may be possible to completely remove the aperture covers, thereby providing improved clearance for passage of objects through the aperture. Furthermore, the risk of damaging the aperture covers during movement of large and heavy components through the aperture is reduced.

The hub enclosure of the present invention may advantageously be positioned at the hub of a wind turbine. Accordingly, the present invention further relates to a wind turbine comprising a hub enclosure according to the invention.

### BRIEF DESCRIPTION OF THE DRAWINGS

The invention will now be described in further detail with reference to the accompanying drawings in which
Fig. 1 is a schematic illustration of a nacelle of a wind turbine,
Fig. 2 is a side view of a hub enclosure according to an embodiment of the invention, the hub enclosure being mounted on a hub,
Fig. 3 is a front view of a hub enclosure according to an embodiment of the invention,
Fig. 4 is a perspective view of the hub enclosure of Fig. 3 as seen from inside the hub enclosure,
Fig. 5 shows the hub enclosure of Figs. 3 and 4 from a different angle,
Fig. 6 is a perspective view of the hub enclosure of Figs. 3-5 with one aperture cover open,
Fig. 7 is a perspective view of the hub enclosure of Figs. 3-6 with two aperture covers open,
Fig. 8 is a perspective view of the hub enclosure of Figs. 3-7 with one aperture cover removed,
Fig. 9 shows an aperture cover of the hub enclosure of Figs. 3-8, and
Fig. 10 is a detail of Fig. 9.

### DETAILED DESCRIPTION OF THE DRAWINGS

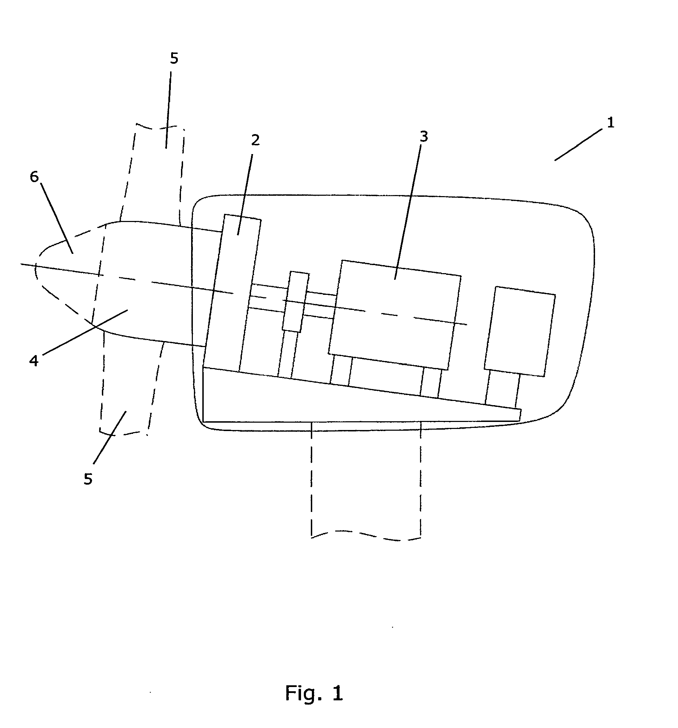

Fig. 1 is a schematic illustration of a nacelle 1 of a wind turbine. Inside the nacelle 1 a gear system 2 and a generator 3 are arranged. A hub 4 holding a set of turbine blades 5 is coupled to the gear system 2. A hub enclosure 6 is mounted at a tip end of the hub 4. Accordingly, Fig. 1 illustrates a possible position of a hub enclosure 6 according to the invention.

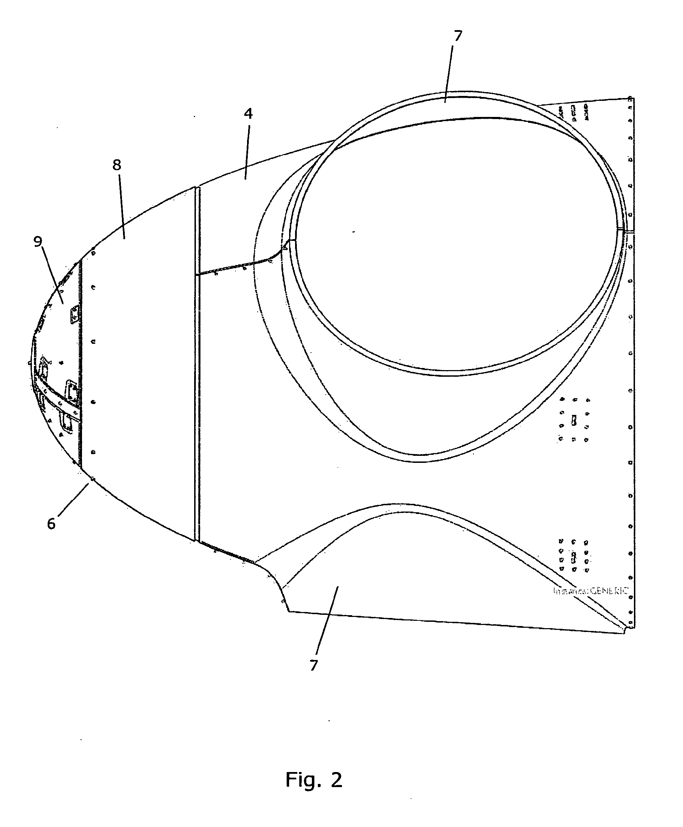

Fig. 2 is a side view of a hub enclosure 6 according to an embodiment of the invention. The hub enclosure 6 is mounted on a hub 4 which is provided with mounting portions 7 adapted to have turbine blades mounted thereon.

The hub enclosure 6 comprises an inner part 8 and an outer part 9. The inner part 8 is arranged closer to the hub 4 than the outer part 9. The inner part 8 forms a substantially single part which extends the entire perimeter of the hub enclosure 6. The outer part 9 is formed by three movable covers. This will be explained in further detail below.

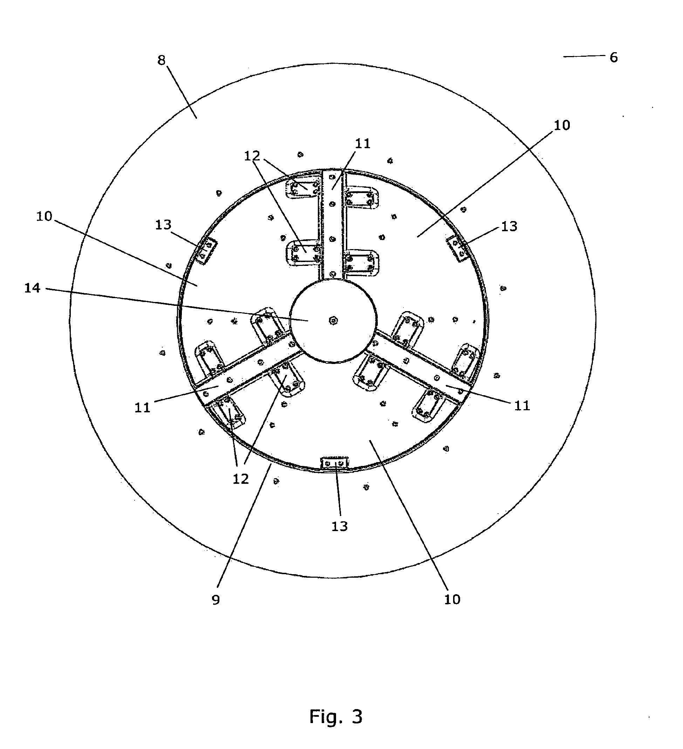

Fig. 3 is a front view of the hub enclosure 6 of Fig. 2. In Fig. 3 the hub enclosure 6 is seen from the exterior of the hub enclosure 6. It is clear from Fig. 3 that the outer part 9 of the hub enclosure 6 comprises three substantially identical aperture covers 10, separated by mounting parts 11. Each of the aperture covers 10 is releasably attached to each of its adjacent mounting parts 11 by means of fittings 12. The mounting parts 11 provide sealing between the aperture covers 10. Each aperture cover 10 is further hinged to the inner part 8 of the hub enclosure 6 by means of a hinge 13. Thus, a part of the aperture can be opened by releasing the fittings 12 corresponding to the aperture cover 10 covering the part of the aperture and rotating the aperture cover 10 via the hinge 13. This will be described further below.

A cover plate 14 is arranged at a centre part of the tip of the hub enclosure 6. Since the three aperture covers 10 as well as the three mounting parts 11 meet at the tip, there is a risk that leaks may occur in this region. The cover plate 14 provides sealing to the region, thereby reducing, or even preventing, leaks.

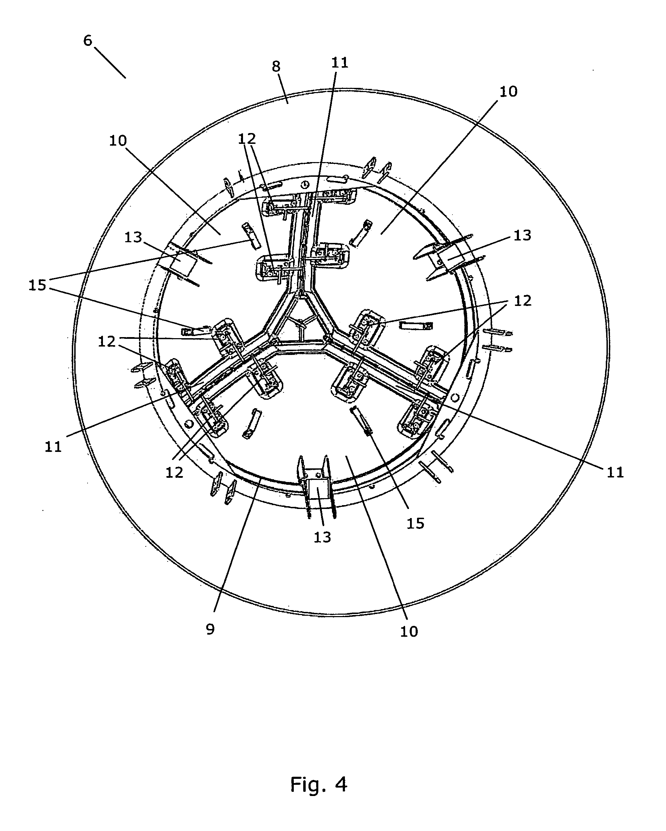

Fig. 4 is a perspective view of the hub enclosure 6 of Figs. 2 and 3, seen from an interior part of the hub enclosure 6. In Fig. 4 the fittings 12 and the hinges 13 are clearly seen. It is also clear that the hinges 13 are arranged in such a manner that the aperture covers 10 are moved inwards, i.e. towards an interior part of the hub enclosure 6, when rotated via the hinges 13.

Each of the aperture covers 10 is provided with two handles 15. When an aperture part is opened manually a person can grip the handles 15 of a corresponding aperture cover 10, after having released the fittings 12, and thereby rotate the aperture cover 10 manually via the hinge 13.

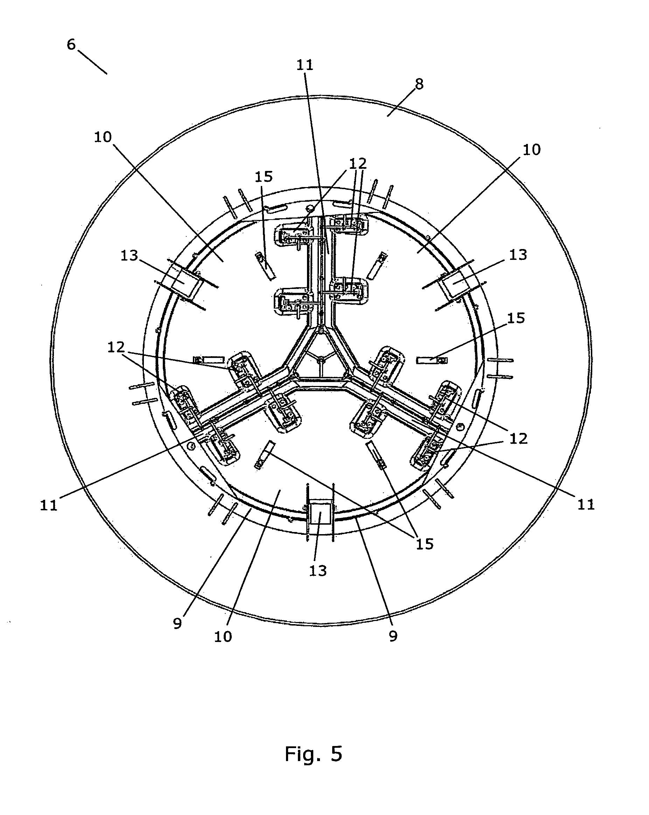

Fig. 5 shows the hub enclosure 6 of Fig. 4 from a slightly different angle.

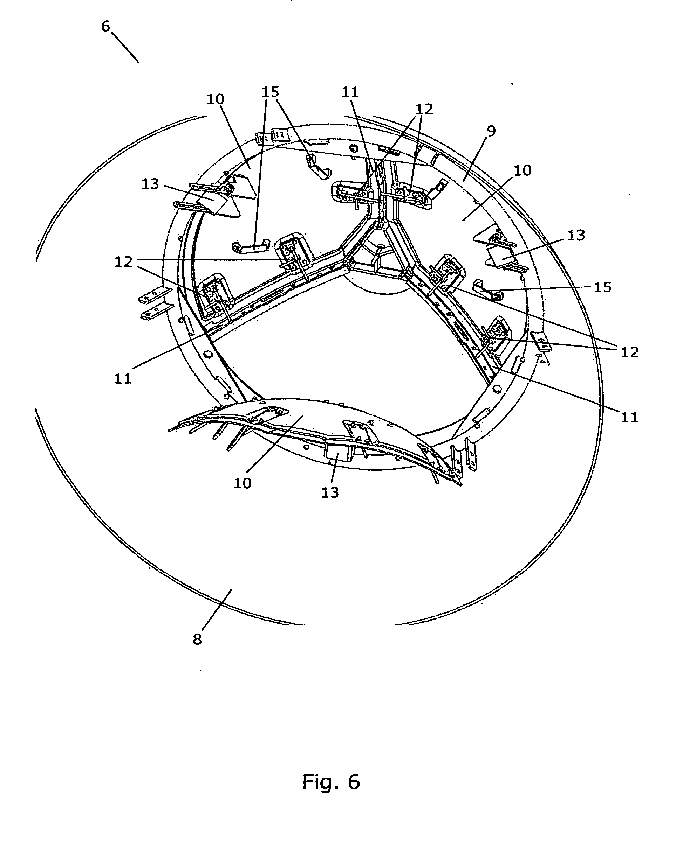

Fig. 6 is a perspective view of the hub enclosure 6 of Figs. 2-5 seen from an interior part of the hub enclosure 6. In Fig. 6 one of the aperture covers 10 has been moved via the hinge 13, thereby providing an aperture part having an area corresponding to the area of the aperture cover 10 and allowing access between an interior part of the hub enclosure 6 and the exterior of the hub enclosure 6. It can be seen that the fittings 12 of the aperture cover 10 has been released, and that the aperture cover 10 has been moved inwards via the hinge 13. The inwards movement of the aperture cover 10 ensures that the aperture cover 10 is under control during this movement, and the risk of dropping the aperture cover 10 out of the hub enclosure 6 is minimised.

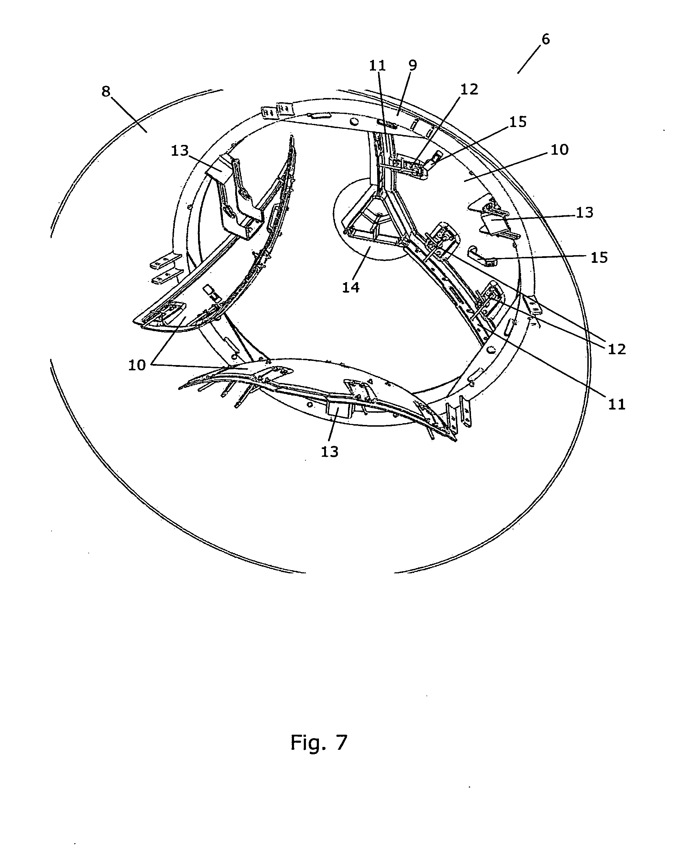

Fig. 7 is a perspective view of the hub enclosure 6 of Figs. 2-6 seen from an interior part of the hub enclosure 6. In Fig. 7 two neighbouring aperture covers 10 have been moved via the corresponding hinges 13. Furthermore the mounting part which is normally arranged between the two moved aperture covers 10 has been removed. As a consequence one large aperture has been provided, the aperture having an area corresponding to the combined areas of the two moved aperture covers 10. It is thereby clear from Fig. 7 that the hub enclosure 6 of Figs. 2-7 provides the possibility of customizing the area of the aperture to match the requirements of a given task. Thus, if only a small component is to be passed through the aperture, only one aperture cover 10 is moved. If a somewhat larger component or a person is to be passed through the aperture, two or three aperture covers 10 are moved, thereby providing an aperture having an area which is two or three times as large as an aperture obtained by moving only one aperture cover 10.

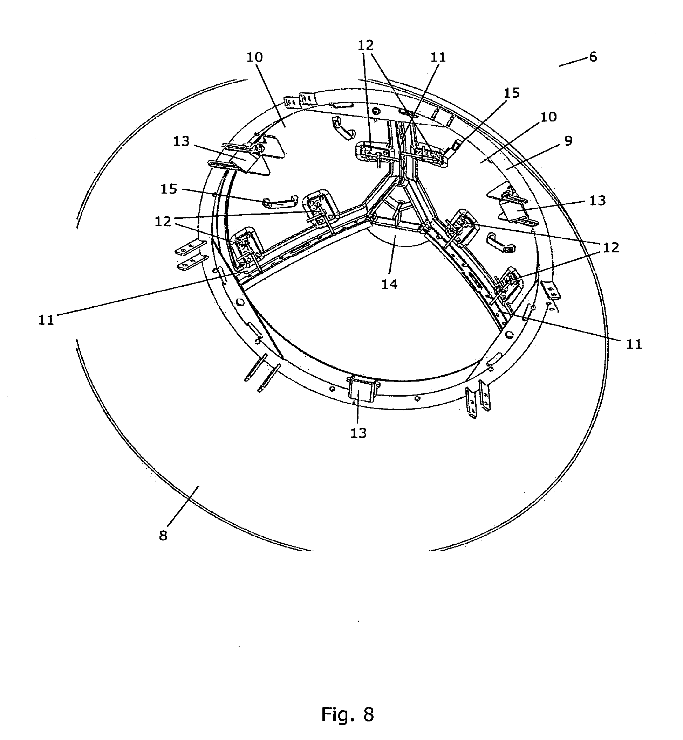

Fig. 8 is a perspective view of the hub enclosure 6 of Figs. 2-7 seen from an interior part of the hub enclosure 6. In Fig. 8 one aperture cover 10 has been moved as described above with reference to Fig. 6. Subsequently, this aperture cover 10 has been removed by releasing it from the hub enclosure 6 at the hinge 13, e.g. by releasing one or more screws or other suitable fastening means. Removing the aperture cover 10 in this manner ensures a more free passage for components or persons through the aperture. This may be required in some cases, and it is therefore an advantage that it is possible to remove an aperture cover 10 completely.

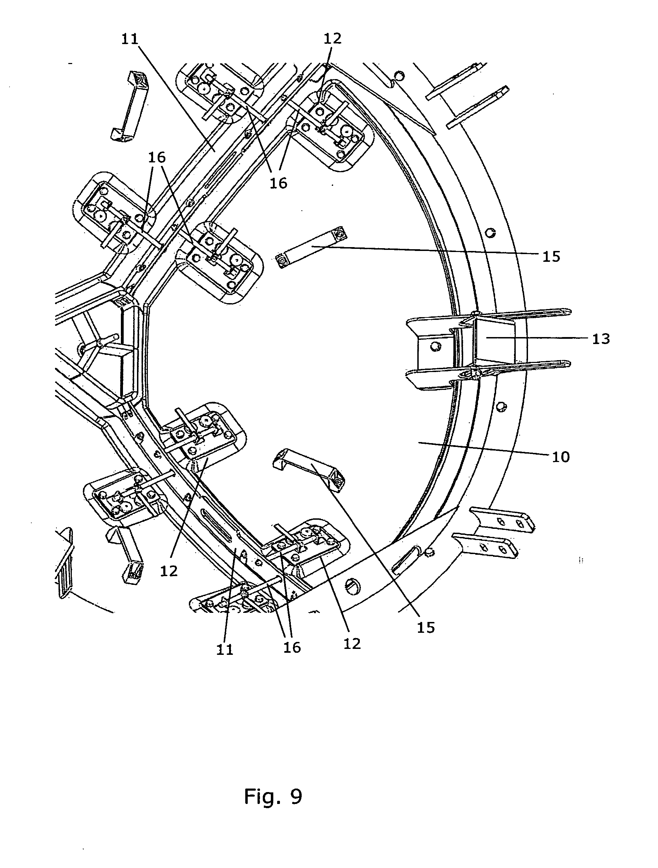

Fig. 9 shows an aperture cover 10 of the hub enclosure 6 of Figs. 2-8. It can be seen that each of the fittings 12 comprises a manually movable pawl 16, each engaging a hole formed on the corresponding mounting part 11. Thus, when it is desired to open a part of the aperture, an operator can pull back the pawls 16 of the relevant fittings 12 until they no longer engage the holes of the mounting parts 11, thereby releasing the relevant aperture cover 10 from the adjacent mounting parts 11. Subsequently, the aperture cover 10 can be moved inwards via the hinge 13 by pulling the handles 15.

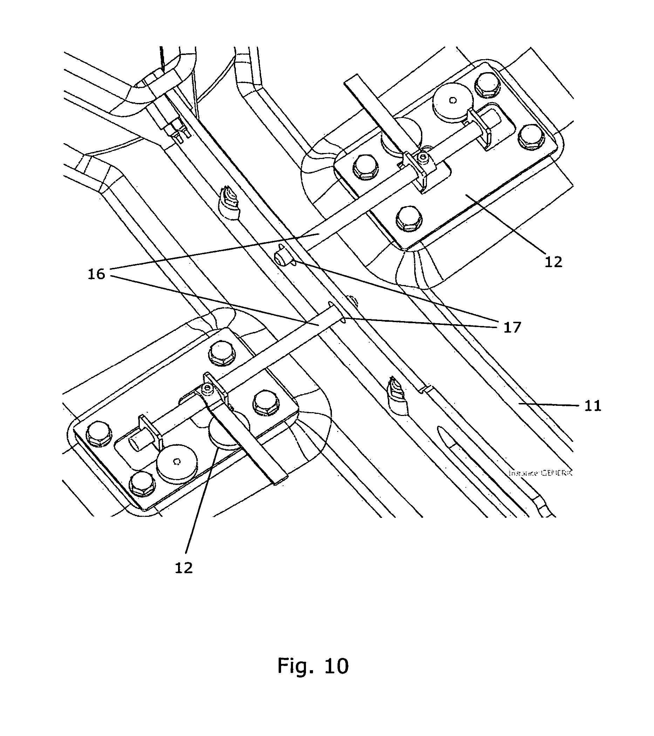

Fig. 10 is a detail of Fig. 9 showing the fittings 12. In Fig. 10 it can be seen how the pawls 16 of the fittings 12 engage holes 17 formed on the mounting part 11, thereby locking the aperture covers to the mounting part 11.

## Claims

1. A hub enclosure for a hub of a wind turbine, said hub enclosure comprising:
- an aperture defining an aperture area,
- at least two aperture covers arranged to cover substantially separate parts of the aperture area, each of the aperture covers being movable between a first position in which the corresponding part of the aperture area is closed and a second position in which the corresponding part of the aperture area is open,
wherein the aperture covers are positioned relative to each other in such a manner that neighbouring aperture covers are arranged to cover adjacent parts of the aperture area, **characterised by** each of the aperture covers being movable from the first position to the second position in a direction towards an interior part of the hub enclosure.

2. A hub enclosure according to claim 1, wherein each of the aperture covers is hinged to a part of the hub enclosure.

3. A hub enclosure according to claim 1 or 2, wherein the aperture is arranged in a tip part of the hub enclosure.

4. A hub enclosure according to any of the preceding claims, further comprising a sealing element arranged to cover a part of at least two of the aperture covers.

5. A hub enclosure according to any of the preceding claims, wherein the hub enclosure is or forms part of a spinner.

6. A hub enclosure according to any of the preceding claims, wherein each of the aperture covers is manually movable between the first position and the second position.

7. A hub enclosure according to any of the preceding claims, further comprising means for automatically moving each of the aperture covers between the first position and the second position.

8. A hub enclosure according to any of the preceding claims, wherein each of the aperture covers is mounted detachably on the hub enclosure.

9. A wind turbine comprising a hub enclosure according to any of the preceding claims.

## Patentansprüche

1. Nabengehäuse für eine Nabe einer Windturbine, wobei das Nabengehäuse
- eine einen Öffnungsbereich bildende Öffnung und
- wenigstens zwei Öffnungsabdeckungen aufweist, die im Wesentlichen getrennte Teile des Öffnungsbereichs abdecken, wobei jede der Öffnungsabdeckungen zwischen einer ersten Stellung, in der der entsprechende Teil des Öffnungsbereichs geschlossen ist, und einer zweiten Stellung bewegbar ist, in der der entsprechende Teil des Öffnungsbereichs offen ist,
wobei die Öffnungsabdeckungen in Bezug aufeinander so angeordnet sind, dass benachbarte Öffnungsabdeckungen eingerichtet sind, benachbarte Teile des Öffnungsbereichs abzudecken, **dadurch gekennzeichnet, dass** jede der Öffnungsabdeckungen von der ersten Stellung in Richtung eines Innenteils des Nabengehäuses in die zweite Stellung bewegbar ist.

2. Nabengehäuse nach Anspruch 1, bei dem jede der Öffnungsabdeckungen mit einem Teil des Nabengehäuses gelenkig verbunden ist.

3. Nabengehäuse nach Anspruch 1 oder 2, bei dem die Öffnung in einem Spitzenteil des Nabengehäuses angeordnet ist.

4. Nabengehäuse nach einem der vorangehenden Ansprüche, das weiterhin über ein Dichtungselement verfügt, das dazu eingerichtet ist, einen Teil von wenigstens zwei der Öffnungsabdeckungen abzudecken.

5. Nabengehäuse nach einem der vorangehenden Ansprüche, bei dem das Nabengehäuse eine Nase oder ein Teil einer Nase ist.

6. Nabengehäuse nach einem der vorangehenden Ansprüche, bei dem jede der Öffnungsabdeckungen manuell zwischen der ersten Stellung und der zweiten Stellung bewegbar ist.

7. Nabengehäuse nach einem der vorangehenden Ansprüche, das weiterhin über Mittel zum automatischen Bewegen jeder der Öffnungsabdeckungen zwischen der ersten Stellung und der zweiten Stellung verfügt.

8. Nabengehäuse nach einem der vorangehenden Ansprüche, bei dem jede der Öffnungsabdeckungen lösbar an dem Nabengehäuse angebracht ist.

9. Windturbine mit einem Nabengehäuse nach einem der vorangehenden Ansprüche.

## Revendications

1. Une enveloppe de moyeu pour un moyeu d'une éolienne, ladite enveloppe de moyeu comprenant:
- Une ouverture définissant une zone d'ouverture,
- Au moins deux couvercles d'ouverture disposés de sorte à couvrir une partie substantielle distincte de la zone d'ouverture, chacun des couvercles d'ouverture étant mobile entre une première position dans laquelle la partie correspondante de la zone d'ouverture est fermée et une seconde position dans laquelle la partie correspondante du zone d'ouverture est ouverte,
dans laquelle, les couvercles d'ouverture sont positionnés l'un par rapport à l'autre de telle manière que les couvercles d'ouverture voisins sont disposées pour couvrir les parties adjacentes de la zone d'ouverture, **caractérisé par** chacun des couvercles d'ouverture étant mobile de la première position à la deuxième position dans une direction vers une partie intérieure de l'enveloppe de moyeu.

2. Une enveloppe de moyeu selon la revendication 1, dans laquelle chacun des couvercles d'ouverture est articulé à une partie de l'enveloppe de moyeu.

3. Une enveloppe de moyeu selon la revendication 1 ou 2, dans laquelle l'ouverture est disposée dans une partie terminale de l'enveloppe de moyeu.

4. Une enveloppe de moyeu selon l'une des revendications précédentes, comprenant en outre un élément d'étanchéité conçu pour couvrir une partie d'au moins deux des couvercles d'ouverture.

5. Une enveloppe de moyeu selon l'une des revendications précédentes, **caractérisé en ce que** l'enveloppe de moyeu est ou forme une partie d'un cône d'hélice.

6. Une enveloppe de moyeu selon l'une des revendications précédentes, dans laquelle chacun des couvercles d'ouverture est mobile manuellement entre la première position et la deuxième position.

7. Une enveloppe de moyeu selon l'une des revendications précédentes, comprenant en outre des moyens pour le déplacement automatique de chaque couvercle d'ouverture entre la première position et la seconde position.

8. Une enveloppe de moyeu selon l'une des revendications précédentes, dans laquelle chacun des couvercles d'ouverture est monté amovible sur l'enveloppe de moyeu.

9. Une éolienne comprenant une enveloppe de moyeu selon l'une des revendications précédentes.
